# EUROPEAN PATENT SPECIFICATION

(11) **EP 1 772 255 B1**
(45) Date of publication and mention of the grant of the patent: **02.07.2008**
(21) Application number: 07000755.4
(22) Date of filing: 14.12.2001
(51) Int. Cl.: B31B 1/52

(54) **Airbag folding apparatus and method**
Verfahren und Vorrichtung zum Falten eines Airbags
Dispositif et procédé pour plier un coussin gonflable

(30) Priority: 21.12.2000 US 257474 P
(43) Date of publication of application: 11.04.2007
(62) Divisional of application: 01991118.9
(73) Proprietor: KEY SAFETY SYSTEMS, INC., Sterling Heights, MI 48314 (US)
(72) Inventor: Arwood, Robert L., Fraser, Michigan 48026 (US); Baumbach, Eric, Sterling Heights, Michigan 48313 (US)
(74) Representative: Gislon, Gabriele

(56) References cited:
- WO-A-00/15467
- DE-A1- 19 831 613
- DE-A1- 19 845 721

## Description

The present invention relates to an apparatus for folding an airbag.

Vehicle airbags are found in most automobiles and in the event of a collision, they are inflated by gas originating from an inflator. The vehicle airbags together with the inflators are mounted in a vehicle as part of the airbag module. The airbags are usually arranged in the airbag module in a folded state and must be folded in such a way that it can unfold as quickly as possible.

Airbags are conventionally folded by spreading the airbag cushion out flat and then folding it specifically at predetermined points resulting in a folded arrangement. This folded arrangement can be accomplished manually, by an automated machine, or both.

There are several disadvantages to the conventional folding method. For example, a very large amount of space is necessary for the purpose of folding the airbag, since the entire airbag must first be spread out flat. Also, the folding process is time consuming since the airbag has to be precisely folded. Furthermore, for automated folding of the airbag, there is a need for a relatively complicated installation, which has to be adapted individually to each case to different airbag shapes and the specific folding sequence thereof. Such complicated folding can only be performed at a limited speed.

US 6,248,052 B1 teaches a method for the folding of an inflatable airbag for motor vehicles which comprises the steps in which an airbag to be folded is fastened with its open end at a carrier. A piston is pushed forward into the airbag through an opening in the carrier and against the closed end of the airbag. The carrier and the piston are introduced into a sleeve, with the airbag being pressed together irregularly.

US application 09/390,428 teaches a method for folding an airbag for an airbag module involving the straightening out of the airbag, pushing or drawing the airbag into an outer guide device, and lastly pushing the airbag together with the outer device to fold the airbag.

DE-A-19845721, which comprises the features mentioned in the preamble of claim 1, discloses an airbag folding apparatus comprising a folding tube through which the airbag to be folded is pushed into an airbag covering The airbag is introduced into and guided through said folding tube by means of a grab and a plunger toward the airbag covering detachably fastened to the folding tube.

### Brief Description of the Drawings

FIG. 1 shows a perspective view of an airbag folding apparatus not claimed by the present invention.
FIG. 2 shows the folding tube being raised in direction A.
FIG. 3 shows the folding tube in an uppermost position.
FIG. 4 shows a folder support apparatus with a fold retention sheet.
FIG. 5 shows the folder tube being lowered in direction B.
FIG. 6 is a perspective view of the folding apparatus with an airbag.
FIG. 7 shows an airbag being compressed by a plunger mechanism.
FIG. 8 shows an airbag fully compressed in the folding apparatus.
FIG. 9 shows a folding apparatus with the folding tube in the raised position.
FIG. 10 shows a folded airbag wrapped with a fold retention sheet in the folder base.
FIG. 11 shows a perspective view of a cushion pack.
FIG. 12 shows a bottom view of a cushion pack.
FIG. 13 shows a folding apparatus with a stationary folding tube according to the present invention.

### Detailed Description of the Invention

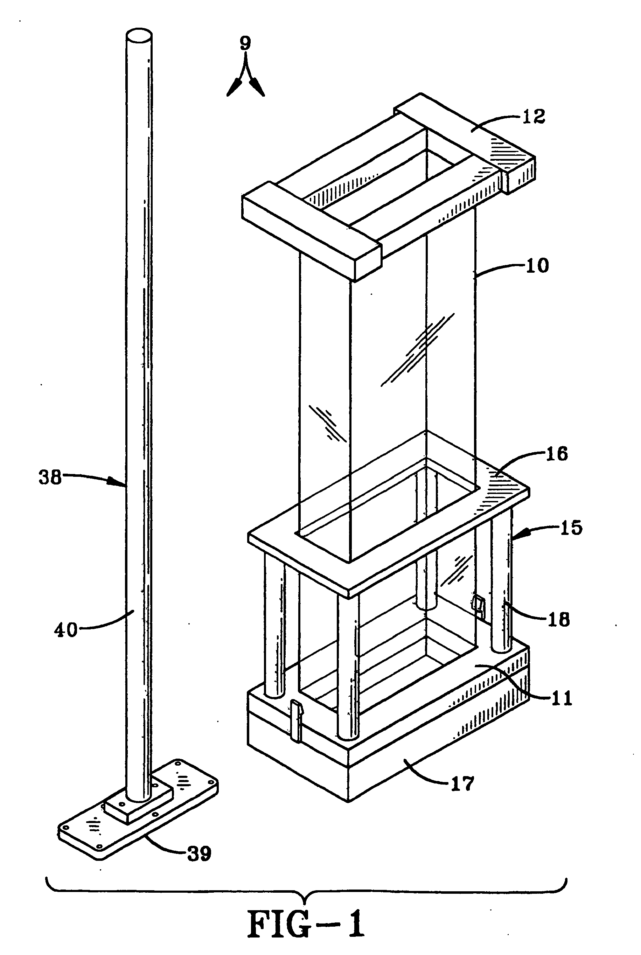

In accordance with the present invention, a folding apparatus 9 is utilized to compress or fold an airbag 41 so that it fits inside an airbag module. FIG. 1 shows a folding apparatus 9, not claimed by the present invention, comprising a plunger mechanism 38, a folding tube 10, and a folder support apparatus 17.

The plunger mechanism 38 includes a push tube or rod 40 and plunger plate 39. The plunger mechanism 38 is utilized to compress the airbag 41 inside the folding tube 10. The plunger plate 39 of the plunger mechanism 38 is attached to the airbag 41 during the folding process, which will be subsequently discussed.

The folding tube 10 in FIG. 1 is shown in its bottommost position, with the lower rim 11 of the folding tube 10 flush against the folder base 17 of a folder support apparatus 15. It is not necessary for all four sides of the folding tube 10 to be transparent. The folding tube 10 has an upper rim 12 defining a first opening for receiving an airbag 41 and the plunger mechanism 38.

The folder support apparatus 15 includes a top support member 16 defining a second opening as well as the folder base 17. As can be seen in FIG. 1, the folding tube 10 is rectangularly shaped, however other shapes are suitable for the present invention. The shape of the second opening of the top support member 16 substantially corresponds to the shape of the folding tube 10. Pillars 18 above the folder base 17 support the top support member 16.

The folding tube 10 is movably attached to the folder support apparatus 15 and is capable of manually being moved up or down. It can be appreciated that the folding apparatus 9 can be designed so that the height of the folding tube is adjusted by the aid of a machine.

The lower rim 11 of the folding tube 10 has apertures for receiving pillars 18. The lower rim 11 of the folding tube 10 can slide from a bottommost position where it is adjacent to the folder base 17 to an uppermost position where it is adjacent to the top support member 16.

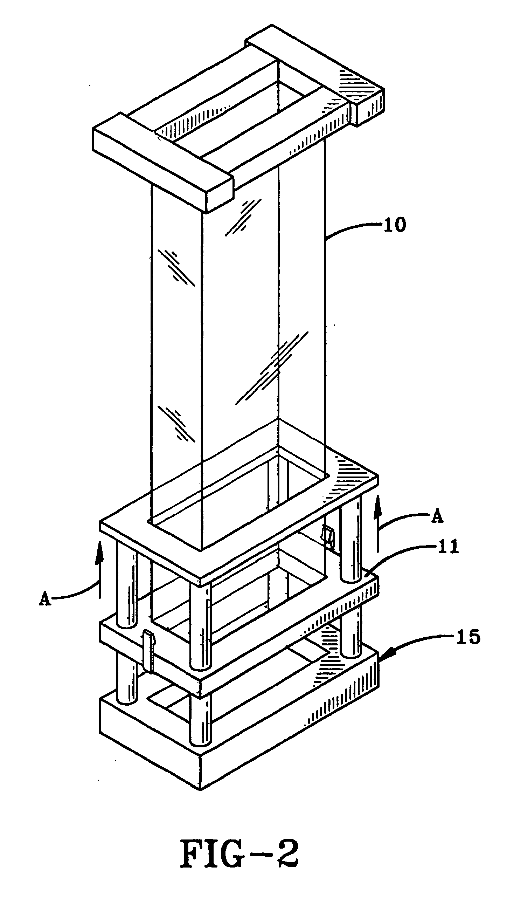

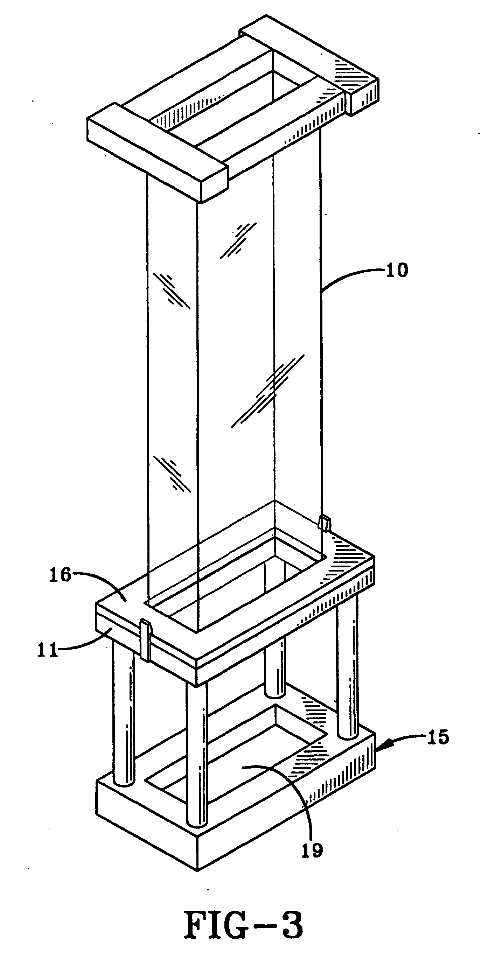

In FIG.2 the folding tube 10 is raised in direction A and in FIG.3 the folding tube is completely in the uppermost position.

As can be seen from the first three figures, the folder base 17 includes a base reservoir 19, which is a rectangular shaped notch in the folder base 17. It is appreciated that other shaped notches can be employed for the present invention. As will be discussed later, an airbag 41 is forcibly pushed into the base reservoir 19 and will conform to the shape of the reservoir.

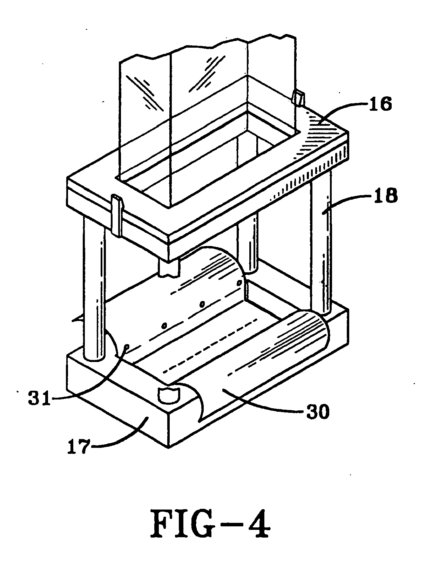

With reference to FIG. 4, a fold retention sheet 30, which will be used to envelop or cover the folded airbag 41, is placed in the base reservoir 19. This sheet can be made of Tyvek®, paper, thin plastic, airbag material, or any other suitable material. The fold retention sheet 30 is opened as the airbag 41 inflates. The fold retention sheet 30 may be attached to a mounting plate (not shown) by including two sets of holes for receiving studs 36 from the mounting plate. FIG. 4 shows a fold retention sheet with one set of holes 31. The other set of holes is not visible in FIG. 4. The holes are positioned to receive studs 36 from the mounting plate.

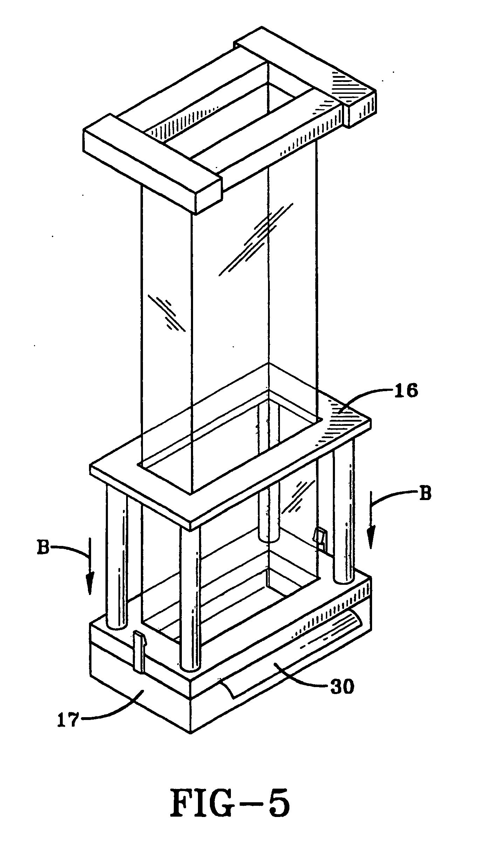

In FIG. 5 the folding tube is slid in direction B back to the bottommost position.

The plunger plate 39 is preferably attached to the mounting plate of the airbag 41; however, the plunger plate 39 may be also directly attached to the airbag 41. The mounting plate has a plurality of studs 36, which correspond to the number of holes in the fold retention sheet. The studs 36 extend away from the airbag cushion. The mounting plate can be oval, round, or any other suitable shape that will be able to slide in the folding tube. It is preferred that the shape of the mounting plate corresponds to the shape of the plunger plate 39. The plunger plate 39 is attached to the mounting plate by twisting a nut 37 or other fastener on each stud. Alternatively, the studs 36 can be tightly received in the plunger plate 39, or can be secured by any other attachment means. The plunger plate 39 is tightly secured to the mounting plate to prevent the airbag 41 and mounting plate from dislodging from the plunger plate 39 during the folding process.

The plunger plate 39 preferably has a cross-sectional surface area that corresponds to the inner cross sectional surface area of the folding tube 10. There is enough space between the plunger plate 39 and the folding tube 10 to allow the plunger plate to move easily in the falding tube along the longitudinal axis thereof. However, the space between the plunger plate and the folding tube is not large to enough for regions of the airbag to pass into this space during the folding process, which could result in the airbag 41 being damaged and the folding apparatus being blocked.

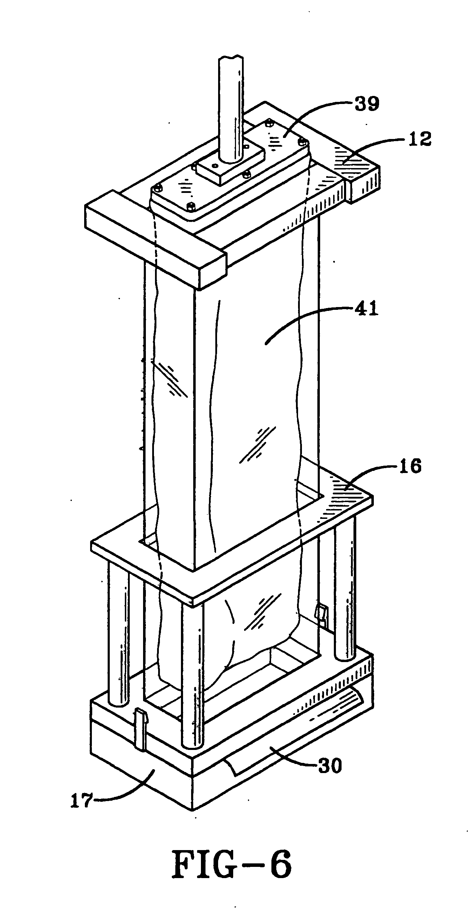

In FIG. 6, the plunger plate 39 is in position proximate the upper rim 12 of the folding tube 10, which is in its bottommost position with the airbag cushion permitted to fall down therefrom. An end of the airbag 41 opposite to an end attached to the plunger plate 39 is the portion of the airbag that is first lowered into the folding tube 10. The plunger mechanism 38 is introduced into the folding tube 10 after the airbag 41 is completely inside the folding tube 10.

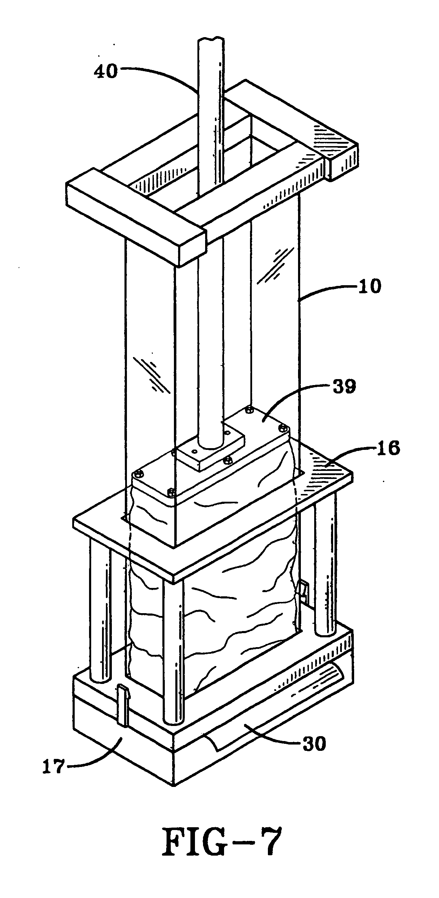

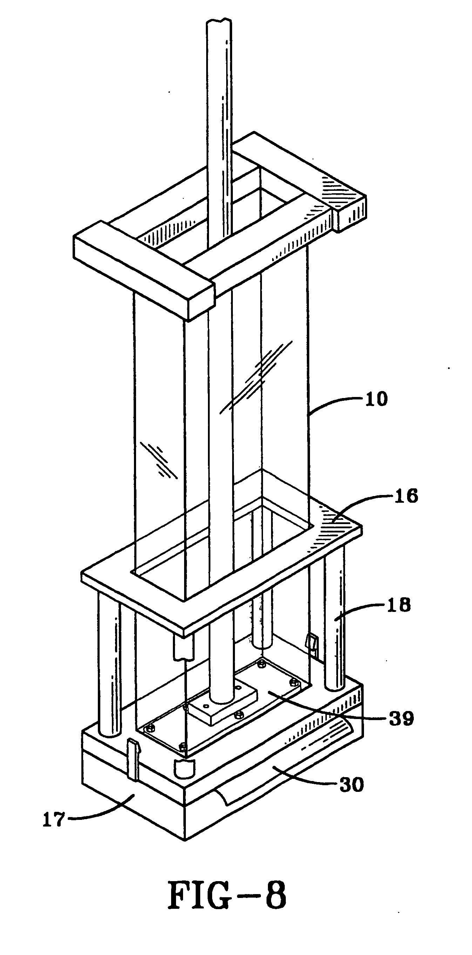

The plunger plate 39 in FIG. 7 is forcibly lowered partially compressing the airbag 41 down into the base reservoir 19 in a direction that is essentially parallel to the longitudinal axis of the folding tube 10. In FIG. 8, the plunger plate 39 has been completely moved through the folding tube 10 trapping the airbag 41 within the base reservoir 19 of the folder base 17. The plunger plate 39 and the push tube 40 remain exterior to the airbag 41 during the folding process. A portion of the fold retention sheet 30 can be seen extending from the folder base 17.

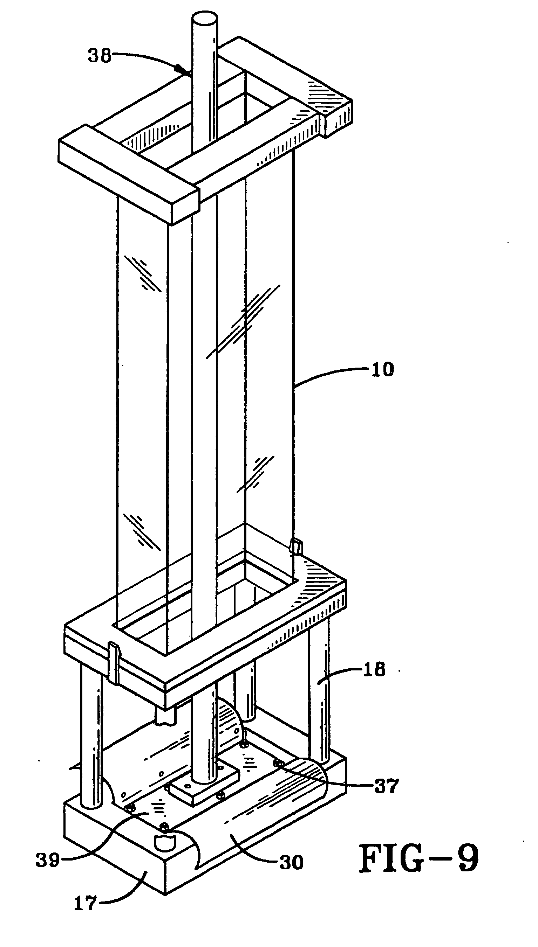

Subsequently, the folding tube 10 in FIG. 9 is lifted and secured to the top rim of the folder support apparatus 15 and secured by a fastening device such as a spring metal clips 20 or completely removed so it does not slide back to its bottommost position. As can be seen, the pusher rod and plunger plate are now accessible through the open sides of the folder support apparatus 15.

Subsequently, if used, the nuts 37 or fasteners are removed from the studs 36.

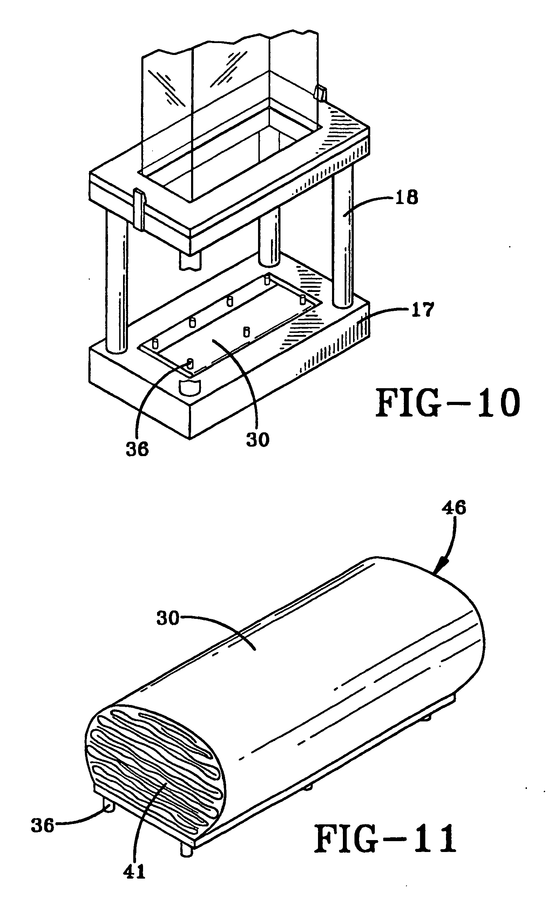

The plunger plate 39 is separated from the mounting plate and slid out through the open top of the folding tube 10. The fold retention sheet 30 is again visible. Thereafter as seen in FIG 10, a first of the sides of the sheet is manipulated and pulled toward the center of the mounting plate so that a first set of studs 36 enters a first set of mounting holes in the sheet. This first side is laid flat on the bottom of the mounting plate. Then the opposite side of the sheet is pulled and also manipulated so that its holes receive the corresponding stud.

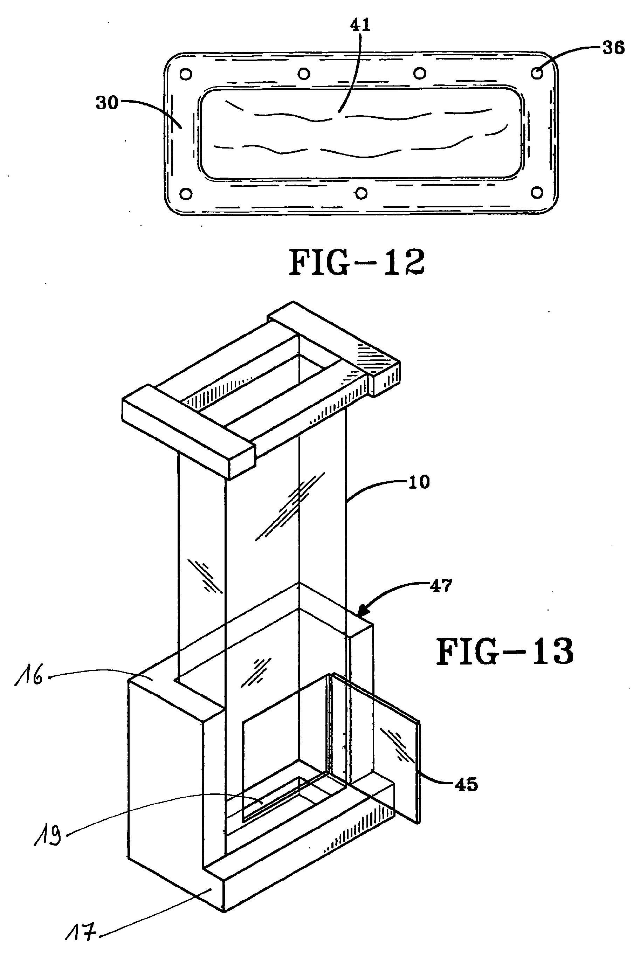

Lastly, the cushion pack 46, formed by the folded airbag 41 and the fold retention sheet 30, which envelops the airbag 41, is removed from the base reservoir 19. FIG. 11 shows the cushion pack, which is added to an airbag module (not shown). FIG. 12 shows the underneath portion of the cushion pack. As seen from this drawing, the fold retention sheet does not completely encapsulate the airbag 41 so that inflation gas can enter the airbag in the event of a car collision.

FIG. 13 shows an embodiment for the present invention. The folding tube 10 in this embodiment is stationary and does not slide up and down the folder support apparatus 47. The folder support apparatus 47 has three walls and the folder tube has an access door 45. The access door is used to place the fold retention sheet 30 inside the folding tube 10 before the folding process commences. During the folding process, the access door is closed to prevent regions of the airbag 41 from escaping the access door. Lastly, the access door is utilized to detach the plunger mechanism 38 from the mounting plate after the airbag 41 is folded and to remove the cushion pack from the base reservoir.

Many changes and modifications in the above-described embodiments of the invention can, of course, be carried out without departing from the scope thereof. Accordingly, that scope is intended to be limited only the scope of the appended claims.

## Claims

1. An airbag folding apparatus comprising: a folding tube (10) defining a first opening for receiving an airbag (41); a folder support apparatus (47) having a folder base (17) with a second opening for receiving the folding tube (10), the folder base (17) having a base reservoir (19) for accommodating the airbag (41) in a folded state; and a plunger mechanism (38) for pushing the airbag (41) into the base reservoir (19) comprising a push member which remains exterior to the airbag (41) throughout a folding of the airbag (41) **characterized by** the folder support apparatus (47) having a plurality of walls connecting a top support member (16) of the folder support apparatus (47) to the folder base (17), the folding tube (10) has an access door (45) for accessing the folded airbag (41).

2. An airbag folding apparatus according to claim 1 wherein the plunger mechanism (38) further comprises a plunger plate (39) having a cross-sectional area that substantially corresponds to a cross sectional area of the first opening of the folding tube (10), the plunger plate (39) remains exterior to the airbag (41) during the folding process.

3. An airbag folding apparatus according to claim 2 wherein the plunger plate (39) is attached to the airbag (41).

4. An airbag folding apparatus according to claim 2 wherein the plunger plate (39) is attached to a mounting plate, the plunger plate (39) has a plurality of holes for receiving studs (36) from a mounting plate of the airbag (41) and for securing the airbag (41) to the plunger mechanism (38).

5. An airbag folding apparatus according to any of claims 1 to 4 wherein the second opening of a top support member (16) has a shape that substantially corresponds to a shape of the folding tube (10).

## Patentansprüche

1. Airbag-Faltvorrichtung, die Folgendes umfasst:
eine Faltröhre (10), die eine erste Öffnung zum Aufnehmen eines Airbags (41) definiert,
eine Faltapparatstützvorrichtung (47), die eine Faltapparatbasis (17) mit einer zweiten Öffnung zum Aufnehmen der Faltröhre (10) hat, wobei die Faltapparatbasis (17) einen Basisbehälter (19) zum Unterbringen des Airbags (41) in einem gefalteten Zustand hat, und einen Druckkolbenmechanismus (38) zum Drücken des Airbags (41) in den Basisbehälter (19), der ein Drückelement umfasst, das während eines gesamten Faltens des Airbags (41) außerhalb des Airbags (41) bleibt, **dadurch gekennzeichnet, dass** die Faltapparatstützvorrichtung (47) mehrere Wände umfasst, die ein oberes Stützelement (16) der Faltapparatstützvorrichtung (47) mit dem Faltapparatbasis (17) verbinden, wobei die Faltröhre (10) eine Zugangstür (45) hat, um zum gefalteten Airbag (41) einen Zugang herzustellen.

2. Airbag-Faltvorrichtung nach einem der Ansprüche 1, wobei der Druckkolbenmechanismus (38) ferner eine Druckkolbenplatte (39) umfasst, die eine Querschnittsfläche hat, die wesentlich einer Querschnittsfläche der ersten Öffnung der Faltröhre (10) entspricht, wobei die Druckkolbenplatte (39) während des Faltvorgangs außerhalb des Airbags (41) bleibt.

3. Airbag-Faltvorrichtung nach Anspruch 2, wobei die Druckkolbenplatte (39) am Airbag (41) befestigt ist.

4. Airbag-Faltvorrichtung nach Anspruch 2, wobei die Druckkolbenplatte (39) an einer Befestigungsplatte befestigt ist, wobei die Druckkolbenplatte (39) mehrere Löcher hat, um Zapfen (36) von einer Befestigungsplatte des Airbags (41) aufzunehmen und um den Airbag (41) am Druckkolbenmechanismus (38) zu befestigen.

5. Airbag-Faltvorrichtung nach einem der Ansprüche 1 bis 4, wobei die zweite Öffnung eines oberen Stützelements (16) eine Form hat, die wesentlich einer Form der Faltröhre (10) entspricht.

## Revendications

1. Appareil de pliage d'un coussin d'air, comprenant :
un tube de pliage (10), définissant une première ouverture pour recevoir un coussin d'air (41) ;
un dispositif de support de l'appareil de pliage (47) comportant une base de l'appareil de pliage (17) avec une deuxième ouverture pour recevoir le tube de pliage (10), la base de l'appareil de pliage (17) comportant un réservoir de base (19) pour recevoir le coussin d'air (41) dans un état plié ; et un mécanisme de piston (38) pour pousser le coussin d'air (41) dans le réservoir de base (19), comprenant un élément poussoir restant à l'extérieur du coussin d'air (41) au cours d'un pliage du coussin d'air (41), **caractérisé en ce que** le dispositif de support de l'appareil de pliage (47) comprend une pluralité de parois connectant un élément de support supérieur (16) du dispositif de support de l'appareil de pliage (47) à la base de l'appareil de pliage (17), le tube de pliage (10) ayant une porte d'accès pour accéder au coussin d'air plié (41).

2. Appareil de pliage d'un coussin d'air selon l'une des revendications 1, dans lequel le mécanisme de piston (38) comprend en outre une plaque de piston (39), comportant une surface de section transversale correspondant pratiquement une surface de section transversale de la première ouverture du tube de pliage (10), la plaque de piston (39) restant à l'extérieur du coussin d'air (41) au cours du processus de pliage.

3. Appareil de pliage d'un coussin d'air selon la revendication 2, dans lequel la plaque de piston (39) est fixée sur le coussin d'air (41).

4. Appareil de pliage d'un coussin d'air selon la revendication 2, dans lequel la plaque de piston (39) est fixée sur une plaque de montage, la plaque de piston (39) comportant plusieurs trous pour recevoir des goujons (36) d'une plaque de montage du coussin d'air (41) et pour fixer le coussin d'air (41) sur le mécanisme de piston (38).

5. Appareil de pliage d'un coussin d'air selon l'une quelconque des revendications 1 à 4, dans lequel la deuxième ouverture d'un élément de support supérieur (16) a une forme correspondant pratiquement à la forme du tube de pliage (10).
